# FASCICULE DE BREVET EUROPEEN

(11) **EP 4 296 540 B1**
(45) Date de publication et mention de la délivrance du brevet: **10.12.2025**
(21) Numéro de dépôt: 23179289.6
(22) Date de dépôt: 14.06.2023
(51) Int. Cl.: F16H 33/02

(54) **SYSTÈME POLYVALENT ÉQUIPÉ D'UNE PAIRE DE MÉCANISMES À ÉLÉMENTS EXCENTRÉS MOBILES EN ROTATION**
MEHRZWECKSYSTEM MIT EINEM PAAR VON MECHANISMEN MIT DREHBAREN EXZENTRISCHEN ELEMENTEN
VERSATILE SYSTEM EQUIPPED WITH A PAIR OF MECHANISMS WITH ECCENTRIC ELEMENTS MOVABLE IN ROTATION

(30) Priorité: 23.06.2022 FR 2206237
(43) Date de publication de la demande: 27.12.2023
(73) Titulaire: Granger, Maurice, Albufeira 8200-385 (PT)
(72) Inventeur: Granger, Maurice, Albufeira 8200-385 (PT)
(74) Mandataire: Santarelli

(56) Documents cités:
- TW-A- 202 111 207
- US-A- 5 150 626

## Description

### 1. Domaine technique

Le domaine de l'invention est celui des systèmes permettant de transmettre de l'énergie mécanique pour toutes applications envisageables.

Plus précisément, la présente invention concerne de tels systèmes permettant d'exploiter, de différentes manières, l'énergie mécanique accumulée dans des éléments excentrés mobiles en rotation.

La présente invention concerne notamment, mais non exclusivement, les problématiques d'accumulation et de restitution d'énergie mécanique, et la conversion de celle-ci en énergie électrique. D'autres applications, en tant que système oscillatoire rapporté sur une structure dédiée, tel un tamis ou une dameuse par exemple, peuvent également être envisagées.

### 2. Art antérieur

Dans le domaine mécanique, il existe de nombreux mécanismes de transmission de mouvement, tels que des trains épicycloïdaux ou des vilebrequins, adaptés pour équiper des machines pour la transmission d'énergie ou toute autre application. Toutefois, les rendements obtenus avec les mécanismes connus ne sont pas entièrement satisfaisants. Le Demandeur a mis au point plusieurs mécanismes à transmission d'énergie, tels que le mécanisme équilibré décrit dans la demande WO2017064379 et le mécanisme à centrifugations croisées simultanées décrit dans la demande WO2018069586, visant à pallier ce problème.

La complexité structurelle constitue néanmoins l'un des principaux inconvénients des mécanismes décrits dans ces demandes. Cette complexité structurelle engendre divers effets néfastes et indésirables vis-à-vis du mécanisme en lui-même, en termes de rendement, d'encombrement et/ou de fiabilité par exemple, et vis-à-vis des utilisateurs de celui-ci, notamment en termes d'expérience d'utilisateur, d'entretien et/ou de sécurité.

Il existe donc un besoin d'une nouvelle technique de transmission d'énergie qui ne présente pas tout ou partie de ces effets néfastes et indésirables. Notamment, il existe un besoin d'un système qui permette une accumulation et une restitution d'énergie mécanique qui soit simple, efficace et fiable. Il existe également un besoin d'une telle technique qui soit polyvalente, ou qui puisse être aisément modulée pour le devenir, pour s'adapter aux différentes applications envisagées et/ou situations rencontrées. Il existe également un besoin de fournir, à moindres coûts, une technique simple de fabrication, d'assemblage et/ou d'entretien.

Le document TW 202 111 207 A semble représenter l'état de la technique le plus proche.

### 3. Exposé de l'invention

La technique proposée se rapporte à un système comprenant un châssis supportant :
- au moins une paire de mécanismes comprenant chacun :
   - un premier arbre de support, mobile en rotation autour d'un axe, équipé d'une première roue dentée et d'un premier élément excentré par rapport à l'axe dudit premier arbre de support, et
   - un deuxième arbre de support, mobile en rotation autour d'un axe, équipé d'une deuxième roue dentée et d'un deuxième élément excentré par rapport à l'axe dudit deuxième arbre de support,
- un arbre principal, mobile en rotation autour d'un axe, équipé d'au moins une roue dentée principale coopérant avec lesdites première et deuxième roues dentées de sorte à lier la rotation de l'arbre principal à la rotation des premier et deuxième arbres de support desdits mécanismes, et inversement, et
- un moyen d'entrainement en rotation couplé audit arbre principal de sorte à entrainer en rotation celui-ci.

Selon l'invention, lesdits premier et deuxième éléments excentrés d'au moins un desdits mécanismes sont disposés au moins partiellement dans un plan de rotation perpendiculaire auxdits premier et deuxième arbres de support associés et, lorsque ledit système est en fonctionnement, en ce que des positions desdits premier et deuxième éléments excentrés d'un desdits mécanismes sont constamment diamétralement opposées à des positions desdits premier et deuxième éléments excentrés de l'autre mécanisme.

Ainsi, le système présente une structure simple (en s'affranchissant d'un balancier, de bielles, et/ou d'un contrepoids par exemple) permettant diverses applications. Dans WO2018/069586, la mise en œuvre d'un balancier, lesté qui plus est, est nécessaire pour amortir les oscillations dues à la centrifugation croisée des masses. Par exemple, lorsque les éléments excentrés sont identiques, le système de la présente invention est équilibré. Il est ainsi possible d'appliquer à l'arbre principal d'un tel système équilibré des vitesses angulaires importantes et donc, de permettre une accumulation d'énergie cinétique importante. Selon un autre exemple, lorsque les éléments excentrés sont différents, le système oscille de manière périodique. Ainsi, en rapportant un tel système oscillatoire sur une structure adéquate, celui-ci peut constituer un mélangeur ou un dispositif de tassement par exemple.

Selon l'invention, le système comprend en outre des moyens de transmission reliant ladite roue dentée principale auxdites première et deuxième roues dentées de sorte à lier la rotation de l'arbre principal à la rotation des arbres de support, et inversement.

De tels moyens de transmission permettent notamment d'écarter les arbres de support de l'axe principal, et donc les roues dentées associées. Ainsi, des éléments excentrés présentant des dimensions (et donc des masses) importantes peuvent être mis en œuvre dans le système. Cela se traduit donc, lors du fonctionnement du système, par une accumulation et restitution d'énergie mécanique importante.

Selon l'invention lesdits moyens de transmission comprennent au moins une roue dentée intermédiaire portée par un arbre intermédiaire, disposée entre ladite roue dentée principale et lesdites première et deuxième roues dentées.

La mise en œuvre d'une ou de plusieurs roues dentées intermédiaires constitue une solution simple et robuste permettant d'assurer une transmission efficace des mouvements de rotation des arbres.

Selon une autre caractéristique particulière, chacun desdits premier et deuxième éléments excentrés est formé d'au moins un corps présentant une bague de liaison audit arbre de support associé.

Une telle configuration permet notamment de moduler le système, en ajoutant ou retirant des masses, en fonction de l'utilisation souhaitée.

Selon une autre caractéristique particulière, lesdits premier et deuxième éléments excentrés sont solidarisés auxdites première et deuxièmes roues dentées respectivement.

Une telle solidarisation permet de renforcer la tenue mécanique des éléments excentrés dans le système, et donc de garantir son fonctionnement et sa robustesse. De préférence, la solidarisation est réalisée par le biais des moyens amovibles, telle une coopération vis de fixation et écrou par exemple. Cela permet notamment de simplifier l'assemblage et la maintenance du système.

De manière alternative, lesdits premier et deuxième éléments excentrés et lesdites première et deuxièmes roues dentées respectivement sont réalisés de manière monobloc.

Un tel agencement permet notamment de réduire l'encombrement de l'élément excentré et d'assurer son maintien sur la roue dentée associée.

Selon une autre caractéristique particulière, chaque premier et deuxième éléments excentrés présente la forme d'une portion de cylindre, de préférence la forme d'un demi-cylindre.

Selon une autre caractéristique particulière, le système comprend au moins un dispositif d'accouplement, ledit dispositif d'accouplement connectant ledit moyen d'entrainement audit arbre principal.

Un tel dispositif d'accouplement permet, selon les besoins, de connecter/séparer l'arbre du moteur à/de l'arbre principal de sorte à lier ou interrompre l'entrainement en rotation.

Selon une autre caractéristique particulière, lesdits premier et deuxième éléments excentrés desdits mécanismes présentent une même masse et des mêmes dimensions, et en ce que ledit système comprend en outre au moins un dispositif de récupération d'énergie couplé audit arbre principal d'un desdits mécanismes, ledit dispositif de récupération d'énergie étant configuré pour convertir une énergie mécanique accumulée dans lesdits éléments excentrés en une énergie électrique.

Une telle configuration permet de définir un système équilibré, c'est-à-dire générant peu voire pas d'oscillation lors de son fonctionnement. Une telle configuration permet notamment de définir un système d'accumulation et de restitution d'énergie efficace. Selon une autre caractéristique particulière, lesdits premier et deuxième éléments excentrés desdits mécanismes présentent des masses différentes.

Une telle configuration permet notamment, lorsque l'opposition diamétrale des masses est constante, la formation d'un système oscillatoire tel que présenté précédemment et, lorsque l'opposition diamétrale des masses est périodique, d'accroître les oscillations formées.

### 4. Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig.1] représente, de manière schématique selon une vue de dessus, un exemple de système, selon un premier mode de réalisation de l'invention, comprenant une paire de mécanismes couplés en parallèle ;
[Fig.2] est une vue en coupe de la figure 1 illustrant le positionnement d'éléments excentrés ;
[Fig.3] représente un exemple structurel d'élément excentré rapporté sur une roue dentée ;
[Fig.4A], [Fig.4B], [Fig.4C] et [Fig.4D] illustrent, selon différentes vues simplifiées, les mouvements en rotation des éléments excentrés du système de la figure 1 lors de son fonctionnement ;
[Fig.5] représente, de manière schématique selon une vue de dessus, un exemple de système, selon un deuxième mode de réalisation de l'invention, comprenant une paire de mécanismes couplés en série ;
[Fig.6A] et [Fig.6B] illustrent, selon deux vues simplifiées associées à chaque mécanisme, un positionnement des éléments excentrés du système de la figure 5 et le déplacement de ceux-ci lors du fonctionnement du système ;
[Fig.7A], [Fig.7B], [Fig.7C] et [Fig.7D] illustrent, selon différentes vues simplifiées, le déplacement des éléments excentrés d'un système selon un troisième mode de réalisation de l'invention ;
[Fig.8A], [Fig.8B], [Fig.8C] et [Fig.8D] illustrent, selon différentes vues simplifiées, le déplacement des éléments excentrés d'un système selon un quatrième mode de réalisation de l'invention ; et
[Fig.9] illustre un autre exemple structurel d'élément excentré, intégré dans une roue dentée.

### 5. Description détaillée de modes de réalisation de l'invention

### 5.1. Principe général

Au prix d'une démarche innovante et d'adaptations non évidentes des mécanismes de l'état de la technique, le Demandeur a déterminé qu'une configuration particulière de certains composants du système, détaillée ci-après, permettait de s'affranchir de la mise en œuvre de certains autres composants et ce, tout en garantissant au système une accumulation d'énergie mécanique efficace.

Le principe général de l'invention repose, dans le cadre d'un système mettant en œuvre au moins une paire de mécanismes couplés comprenant chacun au moins deux arbres de support équipés respectivement d'un élément excentré, dans une configuration particulière selon laquelle les éléments excentrés d'au moins un des mécanismes sont disposés au moins partiellement dans un plan de rotation perpendiculaire aux arbres de support associés et, lorsque le système est en fonctionnement, des positions des éléments excentrés d'un des mécanismes sont constamment diamétralement opposées à des positions des éléments excentrés de l'autre mécanisme.

Une telle configuration ingénieuse permet entre autres de s'affranchir de croisements / chevauchements temporairement des éléments excentrés et donc, de la mise en œuvre d'un dispositif d'amortissement des oscillations générées par ces chevauchements. Outre cette simplification structurelle, cette configuration permet d'exploiter de diverses manières l'énergie mécanique accumulée dans les mécanismes, à savoir sous forme d'énergie électrique lorsque le système est équilibré (masses identiques) ou sous forme d'énergie oscillatoire lorsque le système est instable (masses différentes) par exemple.

### 5.2. Description de modes de réalisation

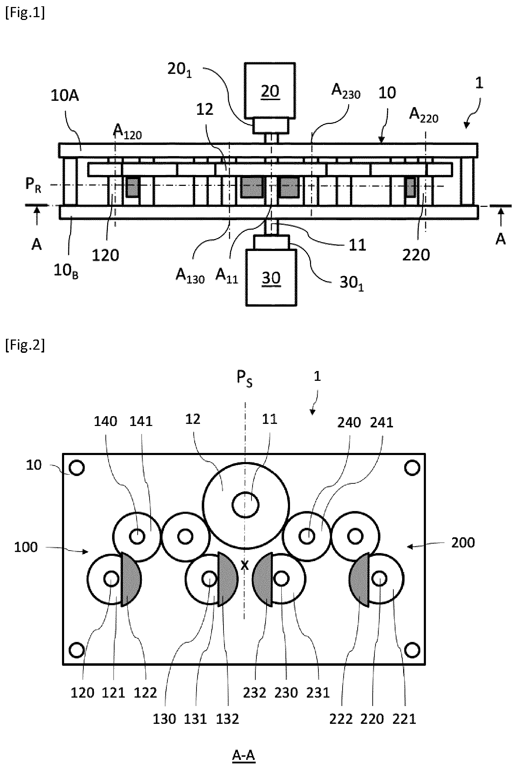

On illustre par la suite différents modes de réalisation de la technique proposée, traités à titre de simples exemples illustratifs, et non limitatifs, à l'appui des figures 1 à 8D faisant directement ou indirectement référence à des systèmes restituant, sous forme d'énergie électrique, l'énergie mécanique accumulée dans chacun des éléments excentrés.

Néanmoins, comme il en ressortira clairement par la suite, la technique proposée n'est pas limitée à cette application et peut, sous réserve d'adaptation des formes, dimensions et/ou masses de certains composants du système, trouver d'autres applications exploitant l'énergie mécanique accumulée dans les éléments excentrés du système.

Par la suite, de mêmes éléments ont été désignés par de mêmes références sur les différentes figures. Pour simplifier la compréhension de l'invention, les roues dentées de certaines figures ont été représentées par des cercles non crantés.

On présente, en relation avec les figures 1 à 4D, un exemple de système d'accumulation et de restitution d'énergie selon un premier mode de réalisation de l'invention.

On décrit en premier lieu, en relation avec les figures 1, 2 et 3, les aspects structurels d'un tel système.

Le système 1 comprend un châssis 10 supportant un arbre principal 11, une paire de mécanismes 100, 200, un moyen 20 d'entrainement en rotation des mécanismes 100, 200 et un dispositif de récupération d'énergie 30 issue des mécanismes 100, 200. L'arbre principal 11, mobile en rotation autour d'un axe A₁₁, est équipé d'une roue dentée principale 12.

Le châssis 10, destiné à être solidarisé au sol, comprend deux structures 10_{A}, 10_{B}, disposées en regard l'une de l'autre, entre lesquelles sont disposés les deux mécanismes 100, 200 et la roue dentée principale 12. Un tel agencement contribue notamment à la stabilité du système 1.

Chaque mécanisme 100, 200 comprend une pluralité d'arbres parallèles entre eux, à savoir premier arbre de support 120, 220 et un deuxième arbre de support 130, 230 respectivement, montés mobiles en rotation sur le châssis 10.

Le premier arbre de support 120, 220, mobile en rotation autour d'un axe A₁₂₀, A₂₂₀, est équipé d'une première roue dentée 121, 221 sur laquelle est solidarisé un premier élément excentré 122, 222 par rapport à l'axe A₁₂₀, A₂₂₀. De manière analogue, le deuxième arbre de support 130, 230, mobile en rotation autour d'un axe A₁₃₀, A₂₃₀, est équipé d'une deuxième roue dentée 131, 231 sur laquelle est solidarisé un deuxième élément excentré 132, 232 par rapport à l'axe A₁₃₀, A₂₃₀.

Les premiers et deuxièmes éléments excentrés 122, 132, 222, 232 des mécanismes 100, 200 sont identiques et sont solidarisés, par des moyens de fixation appropriés, sur les premières et deuxièmes roues dentées 121, 131, 221, 231 associées. Ainsi, chaque roue dentée présente une partie alourdie par l'élément excentré associé.

Chaque mécanisme 100, 200 comprend en outre des moyens de transmission 141, 241 reliant la roue dentée principale 12 aux première et deuxième roues dentées 121, 131, 221, 231 de sorte à lier la rotation de l'arbre principal 11 à la rotation des arbres de support 120, 130, 220, 230, et inversement.

Dans ce mode de réalisation, les mécanismes 100, 200 sont assemblés en parallèle et de manière symétrique. Ainsi, le centre de gravité, représenté par une croix X, d'un tel ensemble (paire de mécanismes) se situe dans le plan de symétrie P_{S} passant par l'axe A₁₁ de rotation de l'arbre principal 11.

Un tel agencement des mécanismes 100, 200 permet aux premier et deuxième éléments excentrés 122, 132 d'un des mécanismes, dit premier mécanisme 100, d'être disposés au moins partiellement dans le plan de rotation P_{R} des premier et deuxième éléments excentrés 222, 232 de l'autre mécanisme, dit deuxième mécanisme 200. En d'autres termes, conformément à un premier aspect de l'invention, les premier et deuxième éléments excentrés 122, 132, 222, 232 d'au moins un des mécanismes 100, 200 sont disposés au moins partiellement dans un plan de rotation P_{R} perpendiculaire aux premier et deuxième arbres de support 120, 130 associés.

Pour permettre le fonctionnement du système 1 présentant une telle disposition, les premiers et deuxièmes éléments excentrés 122, 132, 222, 232 sont dimensionnés de manière à se rapprocher et/ou s'éloigner les uns par rapport aux autres, et donc du centre de gravité, sans se heurter.

Par ailleurs, le système 1 présente un agencement particulier selon lequel :
- les premier et deuxième éléments excentrés 122, 132 du premier mécanisme 100 sont orientés dans une première direction commune opposée à une deuxième direction commune des premier et deuxième éléments excentrés 222, 232 du deuxième mécanisme 200, et
- les moyens de transmission de chaque mécanisme 100, 200 sont agencés de manière à permettre une rotation synchronisée contrarotative des premier et deuxième éléments excentrés 122, 132, 222, 232.

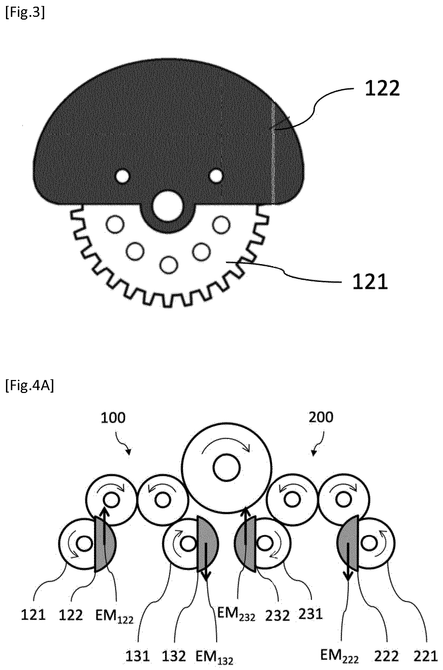

Cet agencement particulier permet, lors du fonctionnement du système 1, aux premier et deuxième éléments excentrés 122, 132 du premier mécanisme 100 d'être dans des positions constamment diamétralement opposées à celles des premier et deuxième éléments excentrés 222, 232 du deuxième mécanisme 200, conformément au second aspect de l'invention. Cela apparaîtra plus clairement en relation avec les figures 4A à 4D décrites ultérieurement.

Dans l'exemple illustré sur les figures 1 à 3, le châssis 10 est de forme parallélépipédique et comprend deux plaques 10_{A}, 10_{B} métalliques disposées en regard l'une de l'autre et solidarisées entre elles, sensiblement dans leurs quatre coins, par des tubulures. Chaque plaque 10_{A}, 10_{B} présente des orifices traversant (non visibles) destinés notamment au passage et au support des arbres des mécanismes 100, 200, de préférence par le biais de paliers (non représentés), tels des roulements à billes. Cela permet notamment de limiter les frottements et donc, optimiser le rendement et la longévité du système. L'arbre principal 11 présente une première extrémité couplée au moyen 20 d'entrainement en rotation et une deuxième extrémité, opposée à la première extrémité, couplée au dispositif de récupération d'énergie 30.

Dans cet exemple, le moyen 20 d'entrainement et le dispositif de récupération d'énergie 30 sont respectivement un moteur et une génératrice électriques coopérant, par le biais d'un dispositif d'accouplement 20₁, 30₁, tel un embrayage, avec l'arbre principal 11.

De tels dispositifs d'accouplement 20₁, 30₁ permettent, selon les besoins, de connecter/séparer l'arbre du moteur 20 à/de l'arbre principal 11 et le rotor de la génératrice 30 à/de l'arbre principal 11 respectivement de sorte à lier ou interrompre l'entrainement en rotation. Par exemple, lors du démarrage du système 1, il peut être envisagé de débrayer la génératrice 30 de l'arbre principal 11 afin d'atteindre plus rapidement une valeur prédéterminée d'énergie mécanique accumulée dans les éléments excentrés. *A contrario,* lorsque cette valeur prédéterminée est atteinte, ou que le fonctionnement du moteur 20 est volontairement ou involontairement interrompu, il peut être envisagé de débrayer le moteur 20 de l'arbre principal 11 afin d'optimiser la restitution d'énergie.

Par ailleurs, le système 1 comprend un câble électrique (non représenté) reliant la sortie de la génératrice 30 à l'entrée du moteur 20 de sorte à y introduire, si besoin, tout ou partie de l'énergie électrique générée. Cela peut notamment trouver un intérêt lorsque le système 1 est en fonctionnement et que, pendant une période de temps relativement courte, aucun consommateur (appareil électrique) n'est raccordé à la génératrice 30.

Dans une telle situation, l'énergie électrique « latente », générée par la génératrice 30, est introduite dans le moteur 20 de sorte à réduire la quantité d'énergie extérieure, issue du réseau électrique, nécessaire pour assurer le fonctionnement du système. En évitant d'interrompre le fonctionnement du système 1, on s'affranchit d'un redémarrage ultérieur, pouvant nécessiter un temps et une quantité d'énergie électrique extérieure considérable selon le dimensionnement du système. De manière alternative ou complémentaire, l'énergie électrique latente peut être en tout ou partie stockée dans une batterie afin d'être restituée ultérieurement.

En outre, dans l'exemple illustré, chaque premier et deuxième élément excentré 122, 132, 222, 232 présente sensiblement la forme d'un demi-cylindre (ou demi-disque), tel qu'illustré en figure 3 notamment.

Par ailleurs, chaque premier et deuxième élément excentré, tel le premier élément excentré 122 représenté en figure 3, présente une bague de liaison 122₁ à l'arbre de support 120 associé. Une telle bague de liaison permet notamment de s'assurer du maintien de l'élément excentré sur l'arbre associé. Ainsi, on minimise les risques que les éléments excentrés se désolidarisent du système lors de son fonctionnement.

La figure 3 met également en évidence la présence de lumières ménagées dans le premier élément excentré 122 et dans la première roue dentée 121 de façon à permettre le passage de vis de fixation (non représentées) assurant leur solidarisation. Bien évidemment, tout autre moyen permettant d'assurer une solidarisation efficace et robuste peut être envisagé.

Les moyens de transmission de chaque mécanisme 100, 200 comprennent, dans l'exemple illustré, deux roues dentées intermédiaires 141, 241, chacune portée par un arbre intermédiaire 140, 240 mobile en rotation par rapport au châssis 10. La première roue dentée intermédiaire 141, 241 est disposée entre la roue dentée principale 12 et la deuxième roue dentée 131, 231 et engrenée avec celles-ci. La deuxième roue dentée intermédiaire 141, 241 est disposée entre la première roue dentée intermédiaire 141, 241 et la première roue dentée 121, 221 et engrenée avec celles-ci. Un tel agencement des moyens de transmission permet d'assurer une rotation synchronisée contrarotative simple et robuste des première et deuxièmes roues dentées de chaque mécanisme.

Les premières et deuxièmes roues dentées 121, 131, 221, 231 ont un même diamètre et un même nombre de dents. Ainsi, les mouvements en rotation des premières et deuxièmes roues dentées 121, 131, 221, 231 sont uniformes.

On décrit désormais les aspects fonctionnels d'un système tel que décrit précédemment.

Le fonctionnement du système 1 peut-être fractionné en plusieurs étapes, à savoir une étape de démarrage, une étape de récupération d'énergie, et si besoin, durant l'étape de récupération d'énergie, des étapes de relance.

L'étape de démarrage consiste à impulser, par le biais du moteur 20, le mouvement de rotation des premières et deuxièmes roues dentées 121, 131, 221, 231 des mécanismes 100, 200 et donc, des premiers et deuxièmes éléments excentrés 122, 132, 222, 232 associés. Cette étape de démarrage est, par exemple, réalisée pendant une période de temps prédéterminée ou jusqu'à atteindre une valeur prédéterminée d'énergie mécanique accumulée dans les éléments excentrés.

Durant l'étape de récupération d'énergie, la génératrice 30 couplée à l'arbre principal 11 du système 1récupère l'énergie mécanique accumulée dans les éléments excentrés et la convertit en énergie électrique.

Les étapes de relance consistent à impulser un nouvel élan aux premières et deuxièmes roues dentées 121, 131, 221, 231. Par exemple, les étapes de relance sont réalisées lorsque la valeur de l'énergie mécanique accumulée dans les éléments excentrés est inférieure à une valeur prédéterminée.

Lorsque le système 1 est en fonctionnement, et ce quelle que soit l'étape décrite ci-dessus, les positions des éléments excentrés des mécanismes, à chaque rotation d'un quart de tour des roues dentées associées, correspondent aux positions successives illustrées sur les figures 4A à 4D.

En positions initiales, illustrées en figure 4A, les premier et deuxième éléments excentrés 122, 132 du premier mécanisme 100 sont orientés vers la droite et les premier et deuxième éléments excentrés 222, 232 du deuxième mécanisme 200 sont orientés vers la gauche.

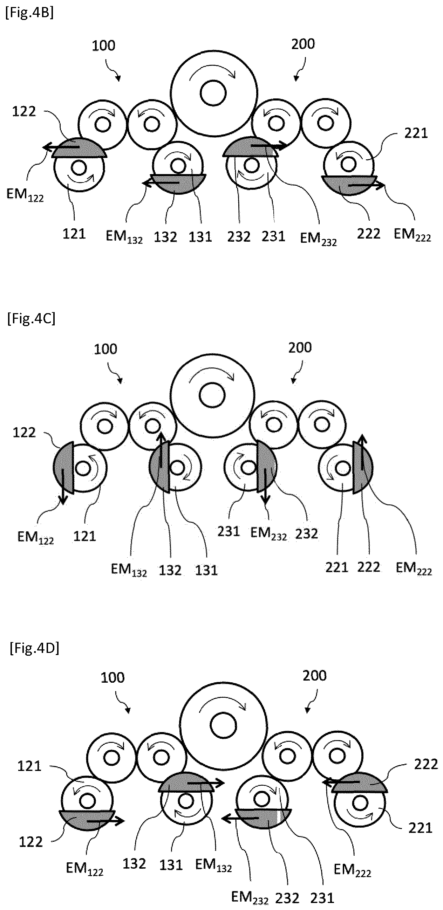

Après une première rotation d'un quart de tour des premières et deuxièmes roues dentées 121, 131, 221, 231, illustrée en figure 4B, le premier élément excentré 122 du premier mécanisme 100 et le deuxième élément excentré 232 du deuxième mécanisme 200 sont orientés vers le haut tandis que le deuxième élément excentré 132 du premier mécanisme 100 et le premier élément excentré 222 du deuxième mécanisme 200 sont orientés vers le bas.

Après une deuxième rotation d'un quart de tour, illustrée en figure 4C, les premier et deuxième éléments excentrés 122, 132 du premier mécanisme 100 sont orientés vers la gauche et les premier et deuxième éléments excentrés 222, 232 du premier mécanisme 200 sont orientés vers la droite.

Après une troisième rotation d'un quart de tour, illustrée en figure 4D, le premier élément excentré 122 du premier mécanisme 100 et le deuxième élément excentré 232 du deuxième mécanisme 200 sont orientés vers le bas tandis que le deuxième élément excentré 132 du premier mécanisme 100 et le premier élément excentré 222 du deuxième mécanisme 200 sont orientés vers le haut.

Ainsi, les rotations synchronisées contrarotatives des première et deuxième roues dentée 121, 131, 221, 231 de chaque mécanisme 100, 200 permettent aux premier et deuxième éléments excentrés 122, 222 du premier mécanisme 100 d'être constamment dans des positions diamétralement opposées aux positions des deuxième et premier éléments excentrés 232, 132 du deuxième mécanisme 200 respectivement.

Cela se traduit donc, d'un point de vue énergétique, par :
- une énergie mécanique EM₁₂₂, c'est-à-dire la somme des énergies cinétique et potentielle, accumulée dans le premier élément excentré 122 du premier mécanisme 100 présentant constamment une direction opposée à une énergie mécanique EM₂₂₂ accumulée dans le premier élément excentré 222 du deuxième mécanisme 200,
- une énergie mécanique EM₁₃₂ accumulée dans le deuxième élément excentré 132 du premier mécanisme 100 présentant constamment une direction opposée à l'énergie mécanique EM₂₃₂ accumulée dans le deuxième élément excentré 232 du deuxième mécanisme 200, et
- des valeurs d'énergies mécaniques EM₁₂₂, EM₁₃₂, EM₂₂₂, EM₂₃₂ identiques.

Ces oppositions diamétrales constantes permettent au système 1 d'être équilibré, et ce, sans la mise en œuvre d'un balancier conformément aux solutions antérieures.

Il est ainsi possible d'appliquer des vitesses de rotation importantes aux premiers et deuxièmes éléments excentrés 122, 132, 222, 232, par exemple de l'ordre de 450 tours/minute, voire 500 tours/minute. Cela se traduit donc par une énergie mécanique accumulée importante et donc, à terme, une énergie électrique générée importante également.

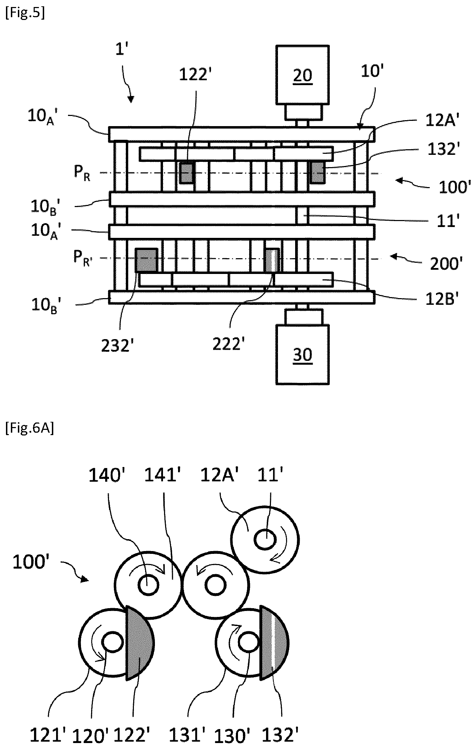

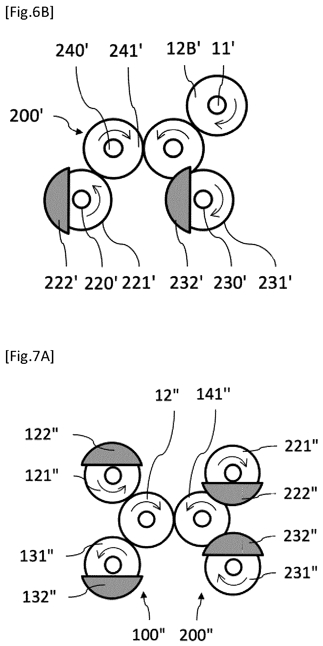

On présente, en relation avec les figures 5, 6A et 6B, un exemple de système d'accumulation et de restitution d'énergie selon un deuxième mode de réalisation de l'invention.

Ce deuxième mode de réalisation se distingue du premier essentiellement par l'assemblage de la paire de mécanismes. Plus précisément dans ce deuxième mode de réalisation, les mécanismes du système sont assemblés en série. Un tel montage permet notamment de réduire l'encombrement du système, en diminuant sa longueur ou sa hauteur. Cela peut permettre au système d'être aisément installé dans des endroits exigus par exemple.

Pour des raisons de concision et de clarté, les éléments communs au premier mode de réalisation ne seront pas décrits.

Dans ce deuxième mode de réalisation, le châssis 10' du système 1' comprend deux paires de structures 10_{A}', 10_{B}', disposées en regard l'une de l'autre, supportant chacun un des mécanismes 100', 200'.

L'assemblage en série des mécanismes 100', 200' est notamment réalisé par le biais de l'arbre principal 11' supportant deux roues dentées principales 12A', 12B' identiques associée respectivement au premier et deuxième mécanismes 100', 200'. Excepté pour les premiers et deuxièmes éléments excentrés 122', 132', 222', 232', un tel assemblage en série permet au système 1' d'être symétrique par rapport à un plan (non représenté) passant sensiblement par le centre de l'arbre principal 11 et perpendiculaire aux arbres principaux 110', 210' notamment.

Avec un tel agencement, les premier et deuxième éléments excentrés 122', 132' du premier mécanisme 100' sont disposés au moins partiellement dans un premier plan de rotation P_{R} et les premier et deuxième éléments excentrés 222', 232' du deuxième mécanisme 200' sont disposés au moins partiellement dans un deuxième plan de rotation P_{R}'. En d'autres termes, conformément au premier aspect de l'invention, les premier et deuxième éléments excentrés 122', 132', 222', 232' d'au moins un des mécanismes 100', 200' sont disposés au moins partiellement dans un plan de rotation P_{R,} P_{R}' perpendiculaire aux premier et deuxième arbres de support 120', 130', 220', 230' associés.

Lorsque le système 1' est en fonctionnement, les deux roues dentées principales 12A', 12B' sont entrainées en rotation dans le même sens.

En couplant la deuxième roue dentée principale 12B' à la deuxième roue intermédiaire des moyens de transmission, on permet aux premier et deuxième éléments excentrés 122', 132' du premier mécanisme d'être constamment dans des positions diamétralement opposées aux positions des premier et deuxième éléments excentrés 222', 232' du deuxième mécanisme 200 respectivement.

Cela se traduit donc, d'un point de vue énergétique (non représenté), par :
- une énergie mécanique accumulée dans le premier élément excentré 122' du premier mécanisme 100' présentant constamment une direction opposée à une énergie mécanique accumulée dans le deuxième élément excentré 232' du deuxième mécanisme 200',
- une énergie mécanique accumulée dans le deuxième élément excentré 132' du premier mécanisme 100' présentant constamment une direction opposée à l'énergie mécanique accumulée dans le premier élément excentré 222' du deuxième mécanisme 200', et
- des valeurs d'énergies mécaniques identiques.

Outre une réduction de l'encombrement, un système selon le deuxième mode de réalisation présente des avantages semblables à ceux d'un système selon le premier mode de réalisation de l'invention.

On présente, en relation avec les figures 7A à 7D, un exemple schématique de système d'accumulation et de restitution d'énergie selon un troisième mode de réalisation de l'invention.

Ce troisième mode de réalisation se distingue du premier, d'une part, par des moyens de transmission intermédiaires simplifiés entre l'arbre principal et les arbres de support et, d'autre part, par l'orientation des éléments excentrés.

Simplifier de tels moyens de transmission intermédiaires se traduit également par une simplification de la structure du système, et donc par un coût de fabrication moindre et un entretien aisé du système.

Pour des raisons de concision et de clarté, les éléments communs au premier mode de réalisation ne seront pas décrits.

Dans ce troisième mode de réalisation, la roue dentée principale 12" est engrenée, d'une part, directement avec les première et deuxième roues dentées 121", 131" du premier mécanisme 100" et, d'autre part, par le biais d'une unique une roue dentée intermédiaire 141" aux première et deuxième roues dentées 221", 231" du deuxième mécanisme 200". Ainsi, les première et deuxième roues dentées 121", 131" du premier mécanisme 100" sont mobiles en rotation contrarotative par rapport aux première et deuxième roues dentées 221", 231" du deuxième mécanisme 200".

De manière analogue au premier mode de réalisation, et conformément au premier aspect de l'invention, les premier et deuxième éléments excentrés 122", 132", 222", 232" des deux mécanismes 100", 200" sont disposés au moins partiellement dans le plan de rotation (non représenté).

Dans ce troisième mode de réalisation, pour chaque mécanisme 100", 200", les premier et deuxième éléments excentrés 122", 132", 222", 232" sont orientés dans des directions opposées (par exemple l'un vers le haut et l'autre vers le bas).

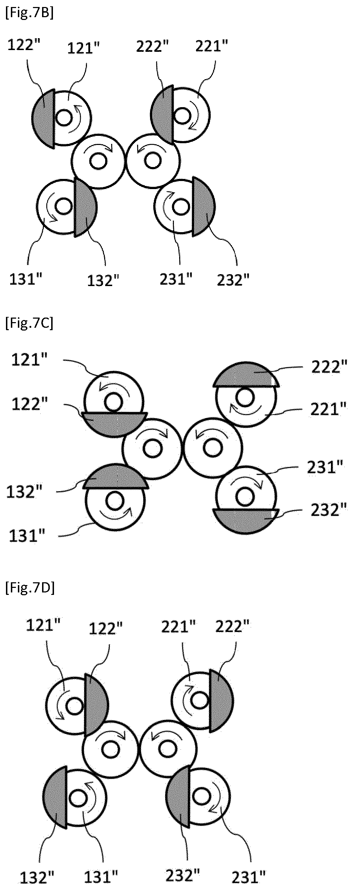

Ainsi, lors du fonctionnement du système 1", à chaque rotation d'un quart de tour, on observe une alternance dans les oppositions diamétrales des premier et deuxième éléments excentrés 122", 132", 222", 232", entre :
- une première configuration, illustrée sur les figures 7A et 7C, dans laquelle la position du premier élément excentré 122" du premier mécanisme 100" est diamétralement opposée à la position du premier élément excentré 222" du deuxième mécanisme 200" tandis que la position du deuxième élément excentré 132" du premier mécanisme 100" est diamétralement opposée à la position du deuxième élément excentré 232" du deuxième mécanisme 200", et
- une deuxième configuration, illustrée sur les figures 7B et 7D, dans laquelle la position du premier élément excentré 122" du premier mécanisme 100" est diamétralement opposée à la position du deuxième élément excentré 232" du deuxième mécanisme 200" tandis que la position du deuxième élément excentré 132" du premier mécanisme 100" est diamétralement opposée à la position du premier élément excentré 222" du deuxième mécanisme 200".

Une telle alternance permet aux premier et deuxième éléments excentrés 122", 132" du premier mécanisme 100" d'être dans des positions constamment diamétralement opposées à celles des premier et deuxième éléments excentrés 222", 232" du deuxième mécanisme 200, conformément au second aspect de l'invention.

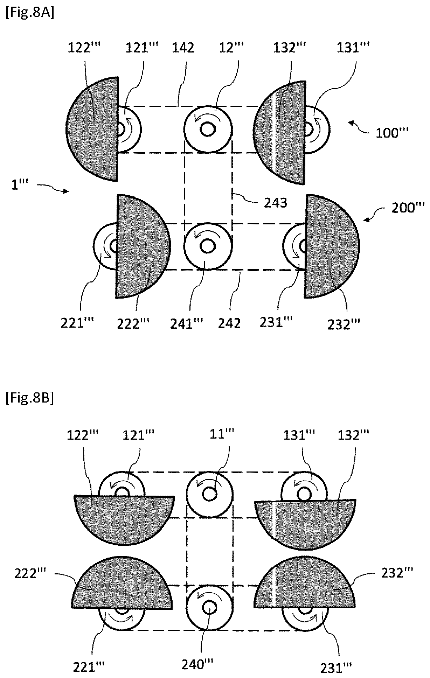

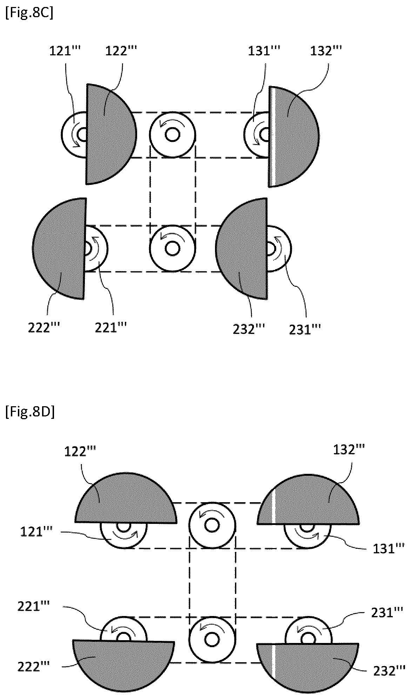

On présente, en relation avec les figures 8A à 8D, un exemple schématique de système d'accumulation et de restitution d'énergie selon un quatrième mode de réalisation de l'invention.

Ce quatrième mode de réalisation se distingue du premier principalement par la nature des moyens de transmission intermédiaires entre l'arbre principal et les arbres de support de chaque mécanisme.

De manière analogue au premier mode de réalisation, et conformément au premier aspect de l'invention, les premier et deuxième éléments excentrés 122‴, 132‴, 222‴, 232‴ des mécanismes 100‴, 200‴ sont disposés au moins partiellement dans le plan de rotation (non représenté).

Dans ce quatrième mode de réalisation, le système 1‴ présente un agencement particulier selon lequel :
- les premier et deuxième éléments excentrés 122‴, 132‴ du premier mécanisme 100‴ sont orientés dans une première direction commune opposée à une deuxième direction commune des premier et deuxième éléments excentrés 222‴, 232‴ du deuxième mécanisme 200‴,
- les premier et deuxième éléments excentrés 122‴, 132‴, 222‴, 232‴ de chaque mécanisme 100‴, 200‴ sont mobiles en rotation synchronisée, et
- les premier et deuxième éléments excentrés 122‴, 132‴ du premier mécanisme 100‴ sont mobiles en rotation synchronisée contrarotative par rapport aux premier et deuxième éléments excentrés 222‴, 232‴ du deuxième mécanisme 200‴.

Ainsi, lors du fonctionnement du système 1‴, les premier et deuxième éléments excentrés 122‴, 132‴ du premier mécanisme 100‴ sont décalés angulairement de sorte à être constamment dans des positions diamétralement opposées aux premier et deuxième éléments excentrés 222‴, 232‴ du deuxième mécanisme 200‴.

Dans l'exemple illustré, les moyens de transmission intermédiaires sont formés par trois chaîne de transmission 142, 242, 13 et des roues dentées intermédiaires.

Plus précisément, une première chaîne de transmission 142 relie les première et deuxième roues dentées 121‴, 131" du premier mécanisme 100‴ à la roue dentée principale 12"'. Une deuxième chaîne de transmission 242 relie les première et deuxième roues dentées 221"', 231" du deuxième mécanisme 200‴ à une première roue dentée intermédiaire 241‴. Une troisième chaîne de transmission 243 relie une deuxième roue dentée intermédiaire (non visible) supportée par l'arbre principal 11‴ à une troisième roue dentée intermédiaire supportée par l'arbre intermédiaire 240 ‴.

La mise en œuvre d'une telle chaîne de transmission constitue une solution simple permettant, d'une part d'écarter les première et deuxième roues dentées 121‴, 131‴, 221‴, 231‴ de la roue dentée principale 111‴, 211‴ et, d'autre part, de permettre à celles-ci d'être entrainées en rotation synchronisée.

En outre, un tel écartement permet notamment de pouvoir mettre en œuvre des éléments excentrés 122‴, 132‴, 222‴, 232‴ de dimensions importantes de façon à augmenter l'énergie mécanique accumulée dans, et *a fortiori* restituée par, ceux-ci.

### 5.3 Autres aspects et variantes

Les quatre modes de réalisation décrits ci-dessus l'ont été en faisant directement ou indirectement référence à des systèmes restituant, sous forme d'énergie électrique, l'énergie mécanique accumulée dans les éléments excentrés.

Toutefois, le système de l'invention ne se limite pas à une telle application.

Par exemple, dans une variante du premier mode de réalisation, les éléments excentrés présentent des masses différentes. Ainsi, lors du fonctionnement du système, les valeurs d'énergie mécanique accumulée dans les éléments excentrés diffèrent. Cela se traduit par une instabilité du système et donc par la génération d'oscillations. Par exemple, un tel système oscillatoire peut, lorsque rapporté sur une structure adéquate, constituer un mélangeur (de peinture notamment) ou un dispositif de tassement (dameuse notamment). Bien évidemment, toute autre application pouvant mettre à profit les oscillations générées par un tel système peut être envisagée.

Par ailleurs, de manière optionnelle, une génératrice peut être couplée à l'arbre principal de sorte à alimenter en énergie électrique des dispositifs électriques associés au mélangeur par exemple des indicateurs lumineux et/ou sonores, un pupitre de commande, etc...

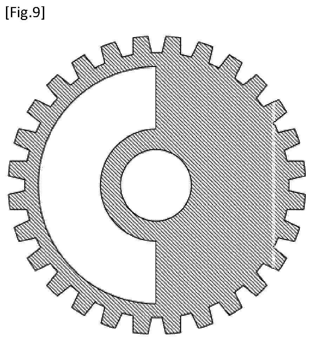

Dans une variante de réalisation, pouvant s'appliquer aux différents modes de réalisation décrits ci-dessus, chaque élément excentré est réalisé de manière monobloc avec la roue dentée associée. Par exemple, une portion intérieure de la roue dentée, de préférence sensiblement une moitié tel qu'illustré en figure 9, est extraite par usinage pour obtenir une roue dentée partiellement évidée. La portion intérieure pleine de la roue dentée formant l'élément excentré.

Un tel agencement monobloc (d'une seule pièce) permet notamment de réduire l'encombrement de l'élément excentré et d'assurer son maintien sur la roue dentée associée.

Dans une autre variante de réalisation, non illustrée, pouvant s'appliquer aux différents modes de réalisation décrits ci-dessus, chaque élément excentré est formé d'une pluralité de corps identiques configurés pour être solidarisés ensemble de manière réversible. Cela permet notamment de moduler le système, en ajoutant ou retirant des corps, en fonction de l'utilisation souhaitée.

Par exemple, si le corps est un demi-disque de 10kg et qu'il a été déterminé que chaque élément excentré doit, pour une première utilisation, présenter une masse totale de 60kg pour que l'énergie mécanique accumulée dans celui-ci puisse répondre aux besoins énergétiques attendus, six corps seront empilés pour former un élément excentré. Puis, si dans une seconde utilisation, il est déterminé que chaque élément excentré doit présenter une masse totale de 100kg, alors l'utilisateur pourra adapter le système en ajoutant quatre corps à chaque élément excentré. Ainsi, il est possible de moduler « sur place » le système plutôt que de devoir se procurer un autre système présentant des éléments excentrés formés chacun par un demi-cylindre de 100 kg.

Selon un autre exemple, tout ou partie des éléments excentrés peuvent être formés d'une quantité de corps différentes de manière à définir un système oscillatoire. En outre, une telle modularité permet de contrôler les oscillations générées et donc, de garantir l'intégrité du système et de son environnement.

Il apparait donc clairement que la technique proposée n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons possibles des différents modes de réalisation décrits précédemment, pouvant être pris séparément ou en association.

Selon différents aspects, la technique proposée présente donc tout ou partie des avantages suivants, en fonction des modes de réalisation retenus :
- proposer un système polyvalent ;
- simplifier la structure du système ;
- proposer un système d'accumulation et de restitution d'énergie mécanique efficace ;
- proposer un système oscillatoire
- garantir une longévité importante du système ;
- garantir une maintenance et/ou un assemblage simplifié du système ;
- garantir la sécurité du système et de son environnement ;
- limiter les coûts de fabrication du système ;
- limiter l'encombrement du système ;
- proposer un système modulable ;
- etc.

## Revendications

1. Système (1) comprenant un châssis (10) supportant :
- au moins une paire de mécanismes (100, 200) comprenant chacun :
- un premier arbre de support (120, 220), mobile en rotation autour d'un axe (A₁₂₀, A₂₂₀), équipé d'une première roue dentée (121, 221) et d'un premier élément excentré (122, 222) par rapport à l'axe (A₁₂₀, A₂₂₀) dudit premier arbre de support (120, 220),et
- un deuxième arbre de support (130, 230), mobile en rotation autour d'un axe (A₁₃₀, A₂₃₀), équipé d'une deuxième roue dentée (131, 231) et d'un deuxième élément excentré (132, 232) par rapport à l'axe (A₁₃₀, A₂₃₀) dudit deuxième arbre de support (A₁₂₀, A₂₂₀),
- un arbre principal (11), mobile en rotation autour d'un axe (A₁₁), équipé d'au moins une roue dentée principale (12, 12A', 12B') coopérant avec lesdites première et deuxième roues dentées (121, 131, 221, 231) de sorte à lier la rotation de l'arbre principal (110, 210) à la rotation des premier et deuxième arbres de support (120, 130, 220, 230) desdits mécanismes (100, 200), et inversement, et
- un moyen (20) d'entrainement en rotation couplé audit arbre principal (110, 210) de sorte à entrainer en rotation celui-ci,
lesdits premier et deuxième éléments excentrés (122, 132, 222, 232) d'au moins un desdits mécanismes (100, 200) sont disposés au moins partiellement dans un plan de rotation (P_{R,} P_{R}') perpendiculaire auxdits premier et deuxième arbres de support (120, 130, 220, 230) associés et, lorsque ledit système (1) est en fonctionnement, des positions desdits premier et deuxième éléments excentrés (122, 132, 222, 232) d'un desdits mécanismes (100, 200) sont constamment diamétralement opposées à des positions desdits premier et deuxième éléments excentrés (122, 132, 222, 232) de l'autre mécanisme (100, 200), **caractérisé en ce qu'**il comprend au moins une roue dentée intermédiaire (141, 241), portée par un arbre intermédiaire (140, 240), disposée entre ladite roue dentée principale (12, 12A', 12B') et lesdites première et deuxième roues dentées (121, 131, 221, 231) de sorte à lier la rotation de l'arbre principal (110, 210) à la rotation des arbres de support (120, 130, 220, 230), et inversement.

2. Système selon la revendication 1, **caractérisé en ce que** chacun desdits premier et deuxième éléments excentrés (122, 132, 222, 232) est formé d'au moins un corps présentant une bague de liaison audit arbre de support (120, 130, 220, 230) associé.

3. Système selon l'une quelconque des revendications 1 et 2, **caractérisé en ce que** lesdits premier et deuxième éléments excentrés (122, 132, 222, 232) sont solidarisés auxdites première et deuxièmes roues dentées (121, 131, 221, 231) respectivement.

4. Système selon l'une quelconque des revendications 1 et 2, **caractérisé en ce que** lesdits premier et deuxième éléments excentrés (122, 132, 222, 232) et lesdites première et deuxièmes roues dentées (121, 131, 221, 231) respectivement sont réalisés de manière monobloc.

5. Système selon l'une quelconque des revendications 1 à 4, **caractérisé en ce que** chaque premier et deuxième éléments excentrés (122, 132, 222, 232) présente la forme d'une portion de cylindre, de préférence la forme d'un demi-cylindre.

6. Système selon l'une quelconque des revendications 1 à 5, **caractérisé en ce qu'**il comprend au moins un dispositif d'accouplement (20₁, 30₁), ledit dispositif d'accouplement connectant ledit moyen (20) d'entrainement audit arbre principal (110).

7. Système selon la revendication 1, **caractérisé en ce que** lesdits premier et deuxième éléments excentrés (122, 132, 222, 232) desdits mécanismes (100, 200) présentent une même masse et des mêmes dimensions, et
**en ce que** ledit système (1) comprend en outre au moins un dispositif de récupération d'énergie (30) couplé audit arbre principal (210) d'un desdits mécanismes (100, 200), ledit dispositif de récupération d'énergie (30) étant configuré pour convertir une énergie mécanique accumulée dans lesdits éléments excentrés (122, 132, 222, 232) en une énergie électrique.

8. Système selon la revendication 1, **caractérisé en ce que** lesdits premier et deuxième éléments excentrés (122, 132, 222, 232) desdits mécanismes (100, 200) présentent des masses différentes.

## Patentansprüche

1. System (1), umfassend einen Rahmen (10), der stützt:
- mindestens ein Paar von Mechanismen (100, 200) jeweils umfassend:
- eine erste Stützwelle (120, 220), die um eine Achse (A₁₂₀, A₂₂₀) drehbeweglich ist, mit einem ersten Zahnrad (121, 221) und einem in Bezug zur Achse (A₁₂₀, A₂₂₀) der ersten Stützwelle (120, 220) ersten exzentrischen Element (122, 222) ausgestattet, und
- eine zweite Stützwelle (130, 230), die um eine Achse (A₁₃₀, A₂₃₀) drehbeweglich ist, mit einem zweiten Zahnrad (131, 231) und einem in Bezug zur Achse (A₁₃₀, A₂₃₀) der zweiten Stützwelle (A₁₂₀, A₂₂₀) zweiten exzentrischen Element (132, 232) ausgestattet,
- eine Hauptwelle (11), die um eine Achse (A₁₁) drehbeweglich ist, mit mindestens einem Hauptzahnrad (12, 12A', 12B') ausgestattet, das mit dem ersten und zweiten Zahnrad (121, 131, 221, 231) zusammenwirkt, um die Drehung der Hauptwelle (110, 210) mit der Drehung der ersten und zweiten Stützwelle (120, 130, 220, 230) der Mechanismen (100, 200), und umgekehrt, zu verknüpfen, und
- ein Drehantriebsmittel (20), das mit der Hauptwelle (110, 210) gekoppelt ist, um diese in Drehung anzutreiben, wobei das erste und zweite exzentrische Element (122, 132, 222, 232) mindestens eines der Mechanismen (100, 200) mindestens teilweise in einer Drehebene (P_{R}, P_{R}') angeordnet sind, die senkrecht zur zugehörigen ersten und der zweiten Stützwelle (120, 130, 220, 230) ist **und,** wenn das System (1) in Betrieb ist, die Positionen des ersten und zweiten exzentrischen Elements (122, 132, 222, 232) eines der Mechanismen (100, 200) stetig diametral gegenüber von Positionen des ersten und zweiten exzentrischen Elements (122, 132, 222, 232) des anderen Mechanismus (100, 200) liegen, **dadurch gekennzeichnet, dass** es mindestens ein Zwischenzahnrad (141, 241) umfasst, das von einer Zwischenwelle (140, 240) getragen wird, die zwischen dem Hauptzahnrad (12, 12A', 12B') und dem ersten und zweiten Zahnrad (121, 131, 221, 231) angeordnet ist, um die Drehung der Hauptwelle (110, 210) mit der Drehung der Stützwellen (120, 130, 220, 230) und umgekehrt zu verknüpfen.

2. System nach Anspruch 1, **dadurch gekennzeichnet, dass** jedes vom ersten und zweiten exzentrischen Element (122, 132, 222, 232) aus mindestens einem Körper gebildet ist, der einen Verknüpfungsring mit der zugehörigen Stützwelle (120, 130, 220, 230) aufweist.

3. System nach einem der Ansprüche 1 und 2, **dadurch gekennzeichnet, dass** das erste und zweite exzentrische Element (122, 132, 222, 232) jeweils fest mit dem ersten und zweiten Zahnrad (121, 131, 221, 231) verbunden sind.

4. System nach einem der Ansprüche 1 und 2, **dadurch gekennzeichnet, dass** das ersten und zweite exzentrische Element (122, 132, 222, 232) und jeweils das erste und zweite Zahnrad (121, 131, 221, 231) in einem Stück ausgeführt sind.

5. System nach einem der Ansprüche 1 bis 4, **dadurch gekennzeichnet, dass** jedes erste und zweite exzentrische Element (122, 132, 222, 232) die Form eines Zylinderabschnitts, vorzugsweise die Form eines Halbzylinders, aufweist.

6. System nach einem der Ansprüche 1 bis 5, **dadurch gekennzeichnet, dass** es mindestens eine Kopplungsvorrichtung (20₁, 30₁ ) umfasst, wobei die Kopplungsvorrichtung das Antriebsmittel (20) mit der Hauptwelle (110) verbindet.

7. System nach Anspruch 1, **dadurch gekennzeichnet, dass** das erste und zweite exzentrische Element (122, 132, 222, 232) der Mechanismen (100, 200) eine gleiche Masse und gleiche Abmessungen aufweisen, und
dadurch, dass das System (1) weiter mindestens eine Energierückgewinnungsvorrichtung (30) umfasst, die an die Hauptwelle (210) eines der Mechanismen (100, 200) gekoppelt ist, wobei die Energierückgewinnungsvorrichtung (30) konfiguriert ist, um eine in den exzentrischen Elementen (122, 132, 222, 232) gespeicherte mechanische Energie in elektrische Energie umzuwandeln.

8. System nach Anspruch 1, **dadurch gekennzeichnet, dass** das erste und zweite exzentrische Element (122, 132, 222, 232) der Mechanismen (100, 200) unterschiedliche Massen aufweisen.

## Claims

1. System (1) comprising a frame (10) supporting:
- at least one pair of mechanisms (100, 200) each comprising:
- a first support shaft (120, 220), capable of moving in rotation about an axis (A₁₂₀, A₂₂₀), equipped with a first toothed wheel (121, 221) and with a first element (122, 222) that is eccentric relative to the axis (A₁₂₀, A₂₂₀) of said first support shaft (120, 220), and
- a second support shaft (130, 230), capable of moving in rotation about an axis (A₁₃₀, A₂₃₀), equipped with a second toothed wheel (131, 231) and with a second element (132, 232) that is eccentric relative to the axis (A₁₃₀, A₂₃₀) of said second support shaft (A₁₂₀, A220),
- a main shaft (11) capable of moving in rotation about an axis (A₁₁), equipped with at least a main toothed wheel (12, 12A', 12B') cooperating with said first and second toothed wheels (121, 131, 221, 231) so as to link the rotation of the main shaft (110, 210) with the rotation of the first and second support shafts (120, 130, 220, 230) of said mechanisms (100, 200), and vice-versa, and
- a rotation driving means (20) coupled to said main shaft (110, 210) so as to rotate same,
said first and second eccentric elements (122, 132, 222, 232) of at least one of said mechanisms (100, 200) are disposed at least partially in a plane of rotation (P_{R,} P_{R}') perpendicular to said associated first and second support shafts (120, 130, 220, 230) **and,** when said system (1) is in operation, positions of said first and second eccentric elements (122, 132, 222, 232) of one of said mechanisms (100, 200) are constantly diametrically opposed to positions of said first and second eccentric elements (122, 132, 222, 232) of the other mechanism (100, 200),
**characterised in that** it comprises at least one intermediate toothed wheel (141, 241) carried by an intermediate shaft (140, 240), disposed between said main toothed wheel (12, 12A', 12B') and said first and second toothed wheels (121, 131, 221, 231) so as to link the rotation of the main shaft (110, 210) to the rotation of the support shafts (120, 130, 220, 230), and vice-versa.

2. System according to claim 1, **characterised in that** each of said first and second eccentric elements (122, 132, 222, 232) is formed by at least one body having a ring for connection to said associated support shaft (120, 130, 220, 230).

3. System according to any one of claims 1 and 2, **characterised in that** said first and second eccentric elements (122, 132, 222, 232) are rigidly connected to said first and second toothed wheels (121, 131, 221, 231) respectively.

4. System according to any one of claims 1 and 2, **characterised in that** said first and second eccentric elements (122, 132, 222, 232) and said first and second toothed wheels (121, 131, 221, 231) respectively are made in one piece.

5. System according to any one of claims 1 to 4, **characterised in that** each first and second eccentric element (122, 132, 222, 232) takes the shape of a portion of a cylinder, preferably the shape of a half-cylinder.

6. System according to any one of claims 1 to 5, **characterised in that** it comprises at least one coupling device (20₁, 30₁), said coupling device connecting said drive means (20) to said main shaft (110).

7. System according to claim 1, **characterised in that** said first and second eccentric elements (122, 132, 222, 232) of said mechanisms (100, 200) have the same mass and the same dimensions, and
**in that** said system (1) further comprises at least one energy harvesting device (30) coupled to said main shaft (210) of one of said mechanisms (100, 200), said energy harvesting device (30) being configured to convert mechanical energy accumulated in said eccentric elements (122, 132, 222, 232) into electrical energy.

8. System according to claim 1, **characterised in that** said first and second eccentric elements (122, 132, 222, 232) of said mechanisms (100, 200) have different masses.
